## Europäisches Patentamt

## European Patent Office

## Office européen des brevets

(11) Veröffentlichungsnummer: **0 272 203**
**A1**

(12) **EUROPÄISCHE PATENTANMELDUNG**

(21) Anmeldenummer: **87730154.9**

(22) Anmeldetag: **20.11.87**

(51) Int. Cl.⁴ **C10L 5/40 , C10L 5/44**

(30) Priorität: **21.11.86 DE 8631195 U**

(43) Veröffentlichungstag der Anmeldung:
**22.06.88 Patentblatt 88/25**

(84) Benannte Vertragsstaaten:
**AT CH DE ES FR GB LI SE**

(71) Anmelder: **BIO-HEIZSTOFFWERK BERLIN GMBH**
**Mariendorfer Damm 49**
**D-1000 Berlin 42(DE)**

(72) Erfinder: **Jäckel-Chatelain, Heinz-Dieter**
**Albrechtstrasse 107**
**D-1000 Berlin 42(DE)**

(74) Vertreter: **Pfenning, Meinig & Partner**
**Kurfürstendamm 170**
**D-1000 Berlin 15(DE)**

(54) **Brennstoffbrikett.**

(57) Es wird ein Brennstoffbrikett in Form eines Preßteils, vorteilhaft eines Holzscheids, beschrieben. Dieses besteht aus einer Mischung aus zerkleinerten Holz-und Rindeteilchen. Vorzugsweise enthält das Brikett zusätzlich Kunstostoffteilchen.

EP 0 272 203 A1

## Brennstoffbrikett

Die Erfindung betrifft ein Brennstoffbrikett in Form eines aus zerkleinertem Material bestehenden Preßteils.

Es sind verschiedene Arten von festen Brennstoffen bekannt, die in der Regel durch Verpressen aus Abfall-oder Restmaterialien hergestellt werden.

Aus der EP 0 129 856 A2 sind ein Verfahren und eine Vorrichtung zur Erzeugung von als Brennstoff verwendbaren Preßlingen insbesondere aus naturfeuchter Biomasse, zum Beispiel aus naturfeuchten land-und forstwirtschaftlichen sowie gartenbaulichen Reststoffen oder aus entsprechend verwertbaren Gewerbemüllbestandteilen, bekannt. Die Biomasse wird zunächst zerkleinert und mit einem mikrokristallinen Wachs als Bindemittel vermischt. In einer Schneckenpresse wird sie anschließend zu einem Preßling geformt.

Bei Biomassen mit relativ hohen Feuchtigkeitsgehalten wird zur Bindung der Feuchte ein anorganisches Adsorptionsmittel zugemischt. Dieser Biobrennstoff hat aufgrund seiner Zusammensetzung und auch aufgrund der in der Regel hohen, nur gebundenen Feuchtigkeit einen relativ geringen Heizwert.

Aus der DE-OS 31 11 324 ist ein fester Brennstoff bekannt, der aus 10 % Papier, 20 % Stroh, 30 % Holz, 10 % Altöl, 5 % Altfett, 10 % Kunststoff, 5 % Ton, Lehm oder Schiefer und 5 % feingemahlenem und getrockenem Schmiersand oder Verbrennungsrückständen hergestellt ist. Auch dieser Brennstoff enthält einen erheblichen Anteil an den Heizwert herabsetzenden Komponenten, so daß er ebenfalls nur beschränkt verwendbar ist.

In der DE-OS 32 39 154 ist ein Naturholzscheit beschrieben, das aus Restholzpreßlingen wie Holzschnitzeln, Sägemehl, Hobelspänen mit einem Gewichtsanteil von 50 bis 100 %, Bindemitteln in Form von Wachsen bzw. Parafinen, synthetischen Klebern oder Naturklebern mit einem Gewichtsanteil von 0 bis 50 % sowie ätherischen Ölen, synthetischen Geruchsstoffen und Flammfärbemitteln mit einem Gewichtsanteil von weniger als 10 % besteht. Hier steht die möglichst getreue Nachbildung eines natürlichen Holzscheits in Vordergrund, nicht jedoch die Herstellung eines allgemein verwendbaren festen Brennstoffs mit hohem Heizwert.

Es ist demnach die Aufgabe der vorliegenden Erfindung, ein Brennstoffbrikett aus in ausreichender Menge verfügbaren Restmaterialien zu schaffen, das einen relativ hohen Heizwert besitzt und umweltfreundlich ist und daher universell einsetzbar ist.

Diese Aufgabe wird erfindungsgemäß dadurch gelöst, daß das zerkleinerte Material eine Mischung aus Holz-und Rindeteilen ist.

Obwohl Rinde in einem erheblichen Umfang anfällt und sie auch einen Heizwert besitzt, der sie für Verbrennungszwecke interessant macht, ist es bisher noch nicht gelungen, sie in wirtschaftlicher Weise insbesondere für den Hausbrand als Brennmaterial zu nutzen. Erst durch das gemeinsame Verpressen von zerkleinerter Rinde und zerkleinertem Holz erhält man lager-und transportfähige Brennstoffbriketts, bei denen der Zellstoff des Holzes als Bindemittel wirkt. Diese Briketts haben einen Heizwert von etwa 20 000 kJ und eignen sich insbesondere zur Verbrennung in Haushalten, wobei sie speziell an Stelle von Holzscheiten bei der Feuerung in offenen Kaminen eingesetzt werden können.

Der Feuchtigkeitsgehalt der Brennstoffbriketts liegt vorzugsweise unter 10 %. Dies ist vorteilhaft sowohl für die Heizkraft der Briketts als auch für deren Festigkeit.

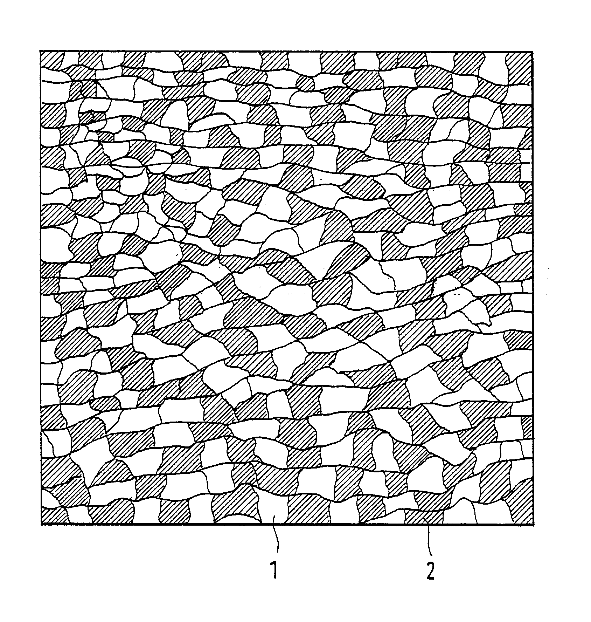

Die Erfindung wird im folgenden anhand eines in der Figur dargestellten Ausführungsbeispiels näher erläutert. Diese zeigt ein Brennstoffbrikett im Querschnitt. Dieses besteht aus Holzteilchen 1 und aus dunkler dargestellten Rindeteilchen 2. Der feste Verbund der Holz-und Rindeteilchen ergibt sich durch Zusammenpressen unter hohem Druck, beispielsweise bis zu 1800 kg/cm², in einer Preßvorrichtung mit vorzugsweise zwei umlaufenden parallelen Schnecken. Durch die Reibung der Teilchen aneinander und durch die hohe Verdichtung wird das Material zusätzlich so stark erwärmt, daß die in ihm enthaltene Feuchtigkeit weitgehend verdampft. Die Holz-und Rindeteilchen werden gegebenenfalls vor dem Verpressen zerkleinert. Durch den als Bindemittel wirkenden Zellstoff des Holzes entsteht beim Verpressen ein fester Verbund zwischen den Holz-und Rindeteilchen.

Je nach Verfügbarkeit der Materialien kann der Anteil des Holzes bzw. der Rinde in den Briketts stark schwanken. Briketts von ausreichender mechanischer Festigkeit erhält man bei einem Holzgehalt von mindestens etwa 10 %, so daß der Holzanteil zwischen etwa 10 und 90 % und der Rindegehalt dementsprechend zwischen etwa 90 und 10 % liegen können.

Ein besonders vorteilhaftes Brikett erhält man, wenn die Mischung des zerkleinerten Materials zusätzlich Kunststoffteilchen enthält. Als besonders geeigneter Kunststoff bietet sich Polyethylen an. Polyethylen besitzt einen sehr hohen Heizwert (ca. 40 000 kJ) und verbrennt ohne die Entwicklung umweltschädlicher Gase. Es bewirkt sogar eine Herabsetzung der Erzeugung von Schadstoffen, insbesondere Stickoxiden, da sich durch die Heizwerterhöhung eine höhere Verbrennungstemperatur einstellt, die zu einer vollständigen Verbrennung und damit einer geringeren Schadstofffreisetzung führt. Weiterhin erhöht es die Bindung zwischen den zusammengepreßten Teilchen des Briketts, so daß dieses ohne besondere Sorgfalt behandelt werden kann. Polyethylen ist ebenfalls ein reichlich anfallendes Abfallprodukt. Der Anteil des Polyethylens im Brennstoffbrikett liegt zweckmäßig zwischen 10 und 50 Gewichtsprozent.

Die Form und Größe der Briketts kann den jeweiligen Bedürfnissen bei der Verbrennung angepaßt werden. Bei der Verbrennung in offenen Kaminen empfiehlt sich die Verwendung von Briketts, die in ihrem Aussehen weitgehend an Holzscheite angeglichen sind.

## Ansprüche

1. Brennstoffbrikett in Form eines aus zerkleinertem Material bestehenden Preßteils, **dadurch gekennzeichnet,** daß das zerkleinerte Material eine Mischung aus Holz-(1) und Rindeteilchen (2) ist.

2. Brikett nach Anspruch 1, dadurch gekennzeichnet, daß der Anteil der Holzteilchen (1) 10 bis 90 % und der Anteil der Rindeteilchen (2) 90 bis 10 % beträgt.

3. Brikett nach Anspruch 1 oder 2, dadurch gekennzeichnet, daß sein Feuchtigkeitsgehalt weniger als 10 % beträgt.

4. Brikett nach einem der Ansprüche 1 bis 3, dadurch gekennzeichnet, daß die Mischung des zerkleinerten Materials zusätzlich Kunststoffteilchen enthält.

5. Brikett nach Anspruch 4, dadurch gekennzeichnet, daß der Kunststoff Polyethylen ist.

6. Brikett nach Anspruch 4 oder 5, dadurch gekennzeichnet, daß der Anteil der Kunststoffteilchen 10 bis 50 Gewichtsprozent beträgt.

7. Brikett nach einem der Ansprüche 1 bis 6, dadurch gekennzeichnet, daß es die Form eines Holzscheits hat.

1                    2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 049 677 (ALZA MECA) * Seite 4, Zeilen 4-24; Seite 5, Zeilen 1-8; Seite 8, Zeilen 17-23; Figur 1 * --- | 1-3,7 | C 10 L 5/40 C 10 L 5/44 |
| X | US-A-4 324 561 (DEAN et al.) * Ansprüche 1,4,5 * --- | 1-3,7 | |
| A | US-A-3 947 255 (HARTMAN et al.) * Ansprüche 1,4 * --- | 4-6 | |
| A | WO-A-7 900 988 (JOHNSTON) * Ansprüche 1,9,10 * --- | 4-6 | |
| A | DE-A-3 320 087 (SONNENSCHEIN) * Ansprüche 1,3,5; Seite 2, Zeilen 18-23; Seite 3, Zeilen 23,24 * --- | 1,7 | |
| A | DE-A-3 235 038 (BUCHHOLZ) * Ansprüche 1-5; Figuren 1-4 * ----- | 1,7 | |

**RECHERCHIERTE SACHGEBIETE (Int. Cl.4)**

C 10 L

Der vorliegende Recherchenbericht wurde für alle Patentansprüche erstellt

| Recherchenort | Abschlußdatum der Recherche | Prüfer |
|---|---|---|
| DEN HAAG | 16-02-1988 | MEERTENS J. |

EPO FORM 1503 03.82 (P0403)